# EUROPEAN PATENT APPLICATION

(11) **EP 4 024 900 A1**
(43) Date of publication of application: **06.07.2022**
(21) Application number: 20866897.0
(22) Date of filing: 15.09.2020
(51) Int. Cl.: H04R 9/06

(54) **SOUND PRODUCING DEVICE AND ELECTRONIC EQUIPMENT**

(30) Priority: 18.09.2019 CN 201910883154
(71) Applicant: Huawei Technologies Co., Ltd., Longgang District Shenzhen, Guangdong 518129 (CN)
(72) Inventor: QIN, Renxuan, Shenzhen, Guangdong 518129 (CN); XU, Chao, Shenzhen, Guangdong 518129 (CN)
(74) Representative: Epping - Hermann - Fischer
(86) International application number: PCT/CN2020/115231
(87) International publication number: WO 2021/052303

(57) **Abstract**

Embodiments of this application provide a sounding component and an electronic device. The electronic device may include a mobile or fixed terminal having a sound playing function, such as a mobile phone, a tablet computer, a notebook computer, an ultra-mobile personal computer (UMPC), a handheld computer, a walkie-talkie, a netbook, a POS terminal, a personal digital assistant (PDA), an event data recorder, a wearable device, a virtual reality device, a Bluetooth speaker/headset, or a factory-installed vehicle component. A damping component is disposed, and the damping component slows down an airflow formed in a rear sound cavity, so that the airflow formed in the rear sound cavity enters a cavity inside the electronic device at a low flow rate. This weakens impact of the airflow on a relatively thin housing of the electronic device, decreases amplitude, damps or alleviates housing vibration of the electronic device, and improves user experience in holding the electronic device by a hand.

## Description

This application claims priority to Chinese Patent Application No. 201910883154.2, filed with the China National Intellectual Property Administration on September 18, 2019 and entitled "SOUNDING COMPONENT AND ELECTRONIC DEVICE", which is incorporated herein by reference in its entirety.

### TECHNICAL FIELD

This application relates to the field of terminal technologies, and in particular, to a sounding component and an electronic device.

### BACKGROUND

With development of electronic technologies, a mobile phone is indispensable in people's daily life, and a speaker (for example, a moving coil speaker, a piezoelectric speaker, or another sound playing component) is an indispensable component of the mobile phone. The speaker is a transducer (transducer) that converts electric energy into sound energy, and specifically converts an electrical signal of an amplifier into mechanical vibration of a diaphragm, so that surrounding air changes in density, to change a sound wave for sounding.

Currently, when a speaker is disposed in a mobile phone, to achieve a large low-frequency extension of the speaker, the speaker uses a half-open rear cavity structure. Specifically, a rear sound cavity of the speaker is connected to inner space of the mobile phone. In this way, a size of the rear sound cavity of the speaker increases, and a low frequency of the mobile phone is less than 650 Hz.

Then, after the rear sound cavity of the speaker is connected to the inner space of the mobile phone, when the speaker works, an airflow generated due to vibration of a diaphragm of the speaker enters the mobile phone through the rear sound cavity and flows in the mobile phone. In this case, a relatively thin rear cover is prone to vibrate. Consequently, a user has a strong vibration feeling when holding the mobile phone by a hand.

### SUMMARY

Embodiments of this application provide a sounding component and an electronic device, to reduce a rate at which an airflow generated by the sounding component flows in the electronic device, reduce airflow impact on a housing of the electronic device, damp vibration of the housing of the electronic device, and improve user experience in holding the electronic device by a hand.

A first aspect of embodiments of this application provides a sounding component, applied to an electronic device having a cavity and a sound hole. The sounding component includes a box and a sounding unit disposed in the box, the box has a front sound cavity and a rear sound cavity that are independent of each other, one end of the sounding unit is located in the front sound cavity, and the other end of the sounding unit is located in the rear sound cavity.

A sound output hole and a leakage hole are disposed in the box, the front sound cavity is connected to the sound hole of the electronic device through the sound output hole, and the rear sound cavity is connected to the cavity of the electronic device through the leakage hole.

The sounding component further includes a damping component. The damping component is located in the rear sound cavity and disposed near the leakage hole, and the damping component is configured to form an airflow channel that connects the rear sound cavity to the cavity of the electronic device.

The damping component is disposed at a position that is in the rear sound cavity and that is close to the leakage hole. An airflow generated due to vibration of a diaphragm of the sounding unit in the rear sound cavity needs to pass through the damping component before entering the cavity of the electronic device. When the airflow passes through the damping component, the damping component can slow down the airflow, so that the airflow enters the cavity inside the electronic device at a low flow rate. This weakens impact of the airflow on a relatively thin rear cover of the electronic device, decreases amplitude, damps or alleviates vibration of the rear cover of the electronic device, and improves user experience in holding the electronic device by a hand.

In a possible implementation, the damping component includes at least one guide board, at least one end of the guide board is connected to an inner wall of the box, and the guide board and a partial inner wall of the box form the airflow channel through enclosing.

The guide board is included. The airflow channel formed by the guide board and the partial inner wall of the box through enclosing extends a path along which an airflow reaches the leakage hole. When the airflow in the rear sound cavity reaches the leakage hole, the airflow enters the cavity in the mobile phone at a low flow rate. This weakens impact on the rear cover, decreases amplitude, damps housing vibration of the rear cover, and improves user handhold experience. When an airflow generated due to vibration of a diaphragm of the sounding unit in the rear sound cavity passes through an impeding layer, the impeding layer reduces a flow rate of the airflow. When the airflow in the rear sound cavity reaches the leakage hole, the airflow enters the cavity in the mobile phone at a low flow rate. This weakens impact on the rear cover, decreases amplitude, and damps housing vibration of the rear cover.

In a possible implementation, the damping component includes a first guide board and a second guide board, and the first guide board is close to the leakage hole.

One end of the first guide board is connected to an inner wall that is of the box and that is close to a display screen of the electronic device, and the other end of the first guide board is suspended.

One end of the second guide board is connected to an inner wall that is of the box and that is close to the rear cover of the electronic device, and the other end of the second guide board is suspended.

An airflow channel formed by using the first guide board and the second guide board has a longer path and a larger airflow slowdown effect, so that an airflow can enter the cavity of the electronic device at a lower flow rate.

In a possible implementation, the damping component includes a first guide board and a second guide board, and the first guide board is close to the leakage hole.

One end of the first guide board is connected to an inner wall that is of the box and that is close to a display screen of the electronic device, and the other end of the first guide board is connected to an inner wall that is of the box and that is close to the rear cover of the electronic device.

One end of the second guide board is connected to the inner wall that is of the box and that is close to the rear cover of the electronic device, and the other end of the second guide board is connected to the inner wall that is of the box and that is close to the display screen of the electronic device.

A first circulation port is disposed in the first guide board, a second circulation port is disposed in the second guide board, the first circulation port is disposed away from the leakage hole, and the second circulation port is disposed away from the first circulation port.

In a possible implementation, the damping component includes at least one waterproof breathable film, and the waterproof breathable film is disposed on the leakage hole.

The waterproof breathable film impedes an airflow, and a transmission rate of the airflow is reduced under impeding of the waterproof breathable film, so that the airflow enters the electronic device at a low flow rate. This weakens airflow impact on the rear cover of the electronic device, decreases amplitude, damps vibration of the rear cover of the electronic device, and improves user experience in holding the electronic device by a hand. In addition, when the damping component includes the waterproof breathable film, the waterproof breathable film may play a waterproof role. When water vapor or liquid exists in the cavity in the electronic device, the water vapor or liquid does not enter the rear sound cavity due to impeding of the waterproof breathable film, thereby avoiding impact of the water vapor or liquid on performance of the sounding unit.

In a possible implementation, the damping component includes at least one mesh, and the mesh is disposed on the leakage hole, or the mesh is connected to inner walls of the box.

The mesh is disposed. Therefore, an airflow can be slowed down, so that the airflow enters the cavity of the electronic device at a low flow rate. Therefore, airflow impact on the rear cover of the electronic device weakens, and amplitude decreases, so that vibration of the rear cover is damped. In addition, the mesh is disposed near the leakage hole, so that the mesh can play a dustproof role, to prevent foreign matter or dust in the cavity of the mobile phone from entering the rear sound cavity.

In a possible implementation, the damping component includes a first mesh and a second mesh, the first mesh is disposed on the leakage hole, the second mesh is connected to the inner walls of the box, and there is buffer space between the first mesh and the second mesh.

The two meshes are disposed, and the buffer space exists between the two meshes. An airflow formed in the rear sound cavity needs to pass through the two meshes and the buffer space before entering the cavity of the electronic device. This reduces a flow rate at which the airflow enters the cavity of the electronic device, weakens airflow impact on the rear cover of the mobile phone, and damps amplitude decreases, so that vibration of the rear cover.

In a possible implementation, a sound absorbing material is disposed in the buffer space, and the sound absorbing material includes one or more of a sound absorbing particle, sound absorbing cotton, and a sound absorbing board.

The sound absorbing material is disposed in the buffer space. After an airflow enters the buffer space, the sound absorbing material impedes the airflow to a specific degree, and the airflow rubs against the sound absorbing material in a transmission process. The rubbing enables partial sound energy to be converted into heat energy to be absorbed by the sound absorbing material. This consumes the sound energy of the airflow, decreases a flow rate of the airflow, and ensures that the airflow enters the cavity of the mobile phone at a low flow rate. Therefore, airflow impact on the rear cover weakens, the rear cover is not prone to housing vibration, and a user is not prone to have a vibration feeling when holding the mobile phone by a hand.

In a possible implementation, at least one partition board is disposed in the box, the partition board partitions inner space of the box into the front sound cavity and the rear sound cavity, and the sounding unit is sleeved onto the partition board.

The inside of the box of the sounding component may be partitioned into the front sound cavity and the rear sound cavity by using the partition board. In addition, installation of the sounding unit in the box may be implemented due to disposition of the partition board.

A second aspect of embodiments of this application provides an electronic device, including at least a display screen, a middle frame, a rear cover, and the sounding component according to any one of the first aspect or the possible implementations of the first aspect. The display screen and the rear cover are respectively located on two sides of the middle frame, the sounding component is located in a cavity formed by the rear cover and the middle frame through enclosing, a front sound cavity of the sounding component is connected to a sound hole disposed in a bezel of the middle frame, and a rear sound cavity of the sounding component is connected to the cavity.

The sounding component is included. This resolves a problem that a user has a strong vibration feeling when holding the electronic device by a hand because the rear cover of the electronic device vibrates after a sound playing function of the electronic device is enabled, and improves handhold experience of the user.

A third aspect of embodiments of this application provides an electronic device, including at least a display screen, a rear cover, and the sounding component according to any one of the first aspect or the possible implementations of the first aspect. The sounding component is located in a cavity formed by the rear cover and the display screen through enclosing, a front sound cavity of the sounding component is connected to a sound hole disposed in a side bezel of the rear cover, and a rear sound cavity of the sounding component is connected to the cavity.

The sounding component is included. This resolves a problem that a user has a strong vibration feeling when holding the electronic device by a hand because the rear cover of the electronic device vibrates after a sound playing function of the electronic device is enabled, and improves handhold experience of the user.

In a possible implementation, the electronic device further includes a sealing member. The sealing member is located between outer edges of the sound output hole and the sound hole, and the sealing member separates the front sound cavity of the sounding component from the cavity in the electronic device.

The front sound cavity is independent of and is not connected to the cavity inside the mobile phone, and an airflow generated due to vibration of a diaphragm of the sounding unit is transmitted outward through the sound output hole and a first sound hole. This resolves a problem of a poor sound playing effect of the electronic device caused because the airflow generated by the sounding unit enters the cavity inside the electronic device after passing through the sound output hole.

### BRIEF DESCRIPTION OF DRAWINGS

FIG. 1 is a schematic diagram of a three-dimensional structure of an electronic device according to an embodiment of this application;
FIG. 2 is a schematic exploded diagram of a structure of an electronic device according to an embodiment of this application;
FIG. 3 is a schematic diagram of another three-dimensional structure of an electronic device according to an embodiment of this application;
FIG. 4 is a schematic diagram of a structure of a middle frame and a sounding component of an electronic device according to an embodiment of this application;
FIG. 5 is a schematic diagram of a structure in which a sounding component of an electronic device is installed on a middle frame according to an embodiment of this application;
FIG. 6A is a schematic diagram of a cross-sectional structure of a sounding component, a middle frame, a rear cover, and a display screen of an electronic device according to an embodiment of this application;
FIG. 6B is a schematic diagram of a cross-sectional structure of a sounding component, a middle frame, a rear cover, and a display screen of an electronic device according to an embodiment of this application;
FIG. 7 is a schematic diagram of a cross-sectional structure of a sounding component, a middle frame, a rear cover, and a display screen of an electronic device according to an embodiment of this application;
FIG. 8 is a schematic diagram of a cross-sectional structure of a sounding component, a middle frame, a rear cover, and a display screen of an electronic device according to an embodiment of this application;
FIG. 9 is a schematic diagram of a cross-sectional structure of a sounding component, a middle frame, a rear cover, and a display screen of an electronic device according to an embodiment of this application; and
FIG. 10 is a schematic diagram of a cross-sectional structure of a sounding component, a middle frame, a rear cover, and a display screen of an electronic device according to an embodiment of this application.

Reference numerals in the drawings are described as follows:
100-mobile phone; 101-cavity; 10-display screen; 20-middle frame; 25- middle metal plate; 21-right side bezel; 22-bottom side bezel; 221-first sound hole; 222-power interface; 223-second sound hole; 23-left side bezel; 24-top side bezel; 30-circuit board; 40-battery; 50-sounding component; 51-box; 511-front sound cavity; 5111-sound output hole; 512-rear sound cavity; 5121-leakage hole; 513-sealing member; 514-vertical partition board; 515-horizontal partition board; 52-sounding unit; 53, 54, and 55-damping components; 531-first guide board; 5311-first circulation gap; 532-second guide board; 5321-second circulation gap; 53a-upper guide board; 53b-lower guide board; 53c-circulation port; 551-first mesh; 552-second mesh; 553-buffer space; 554-sound absorbing particle; 555-sound absorbing cotton; and 60-rear cover.

### DESCRIPTION OF EMBODIMENTS

Terms used in implementations of this application are merely used to explain specific embodiments of this application, but are not intended to limit this application. The following describes the implementations in embodiments of this application in detail with reference to accompanying drawings.

An embodiment of this application provides an electronic device, including but not limited to a mobile or fixed terminal having a sound playing function, such as a mobile phone, a tablet computer, a notebook computer, an ultra-mobile personal computer (ultra-mobile personal computer, UMPC), a handheld computer, a walkie-talkie, a netbook, a POS terminal, a personal digital assistant (personal digital assistant, PDA), an event data recorder, a wearable device, a virtual reality device, a Bluetooth speaker/headset, or a factory-installed vehicle component.

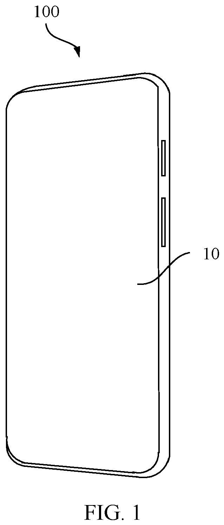

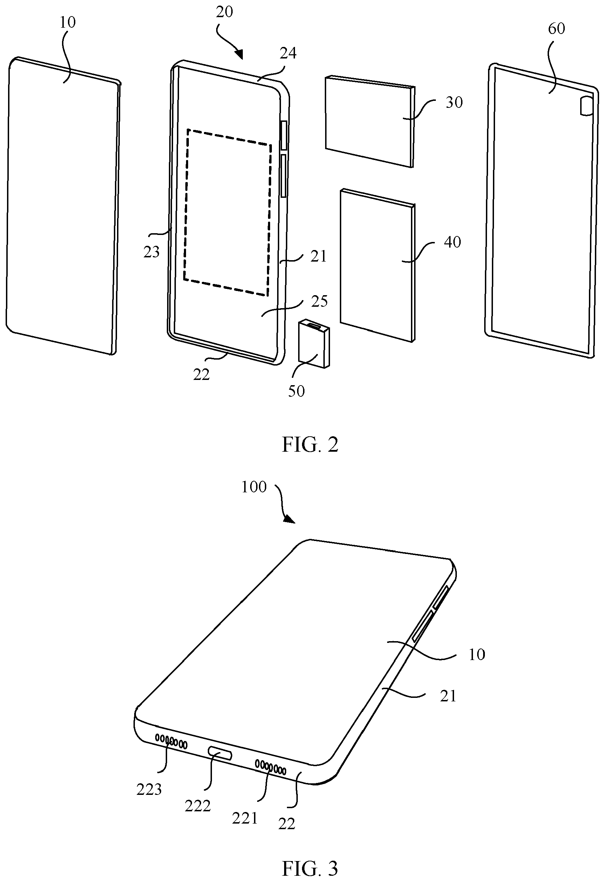

In this embodiment of this application, a mobile phone 100 is used as the electronic device as an example for description. FIG. 1 and FIG. 2 respectively show an overall structure and a split structure of the mobile phone 100. As shown in FIG. 2, the mobile phone 100 may include a display screen 10 and a rear cover 60. A middle frame 20, a circuit board 30, and a battery 40 may be disposed between the display screen 10 and the rear cover 60. The circuit board 30 and the battery 40 may be disposed on the middle frame 20. For example, the circuit board 30 and the battery 40 are disposed on a surface that is of the middle frame 20 and that faces the rear cover 60. Alternatively, the circuit board 30 and the battery 40 may be disposed on a surface that is of the middle frame 20 and that faces the display screen 10.

In this embodiment of this application, when the battery 40 is disposed on the middle frame 20, for example, a battery compartment may be disposed on the surface that is of the middle frame 20 and that faces the rear cover 60, and the battery 40 is installed in the battery compartment on the middle frame 20 (shown by a dashed box in FIG. 2). In this embodiment of this application, the battery 40 may be connected to the circuit board 30 through a power management module and a charging management module. The power management module receives input of the battery 40 and/or input of the charging management module, and supplies power to a processor, an internal memory, an external memory, the display screen 10, a camera, a communications module, and the like. The power management module may be further configured to monitor parameters such as a capacity of the battery 40, a cycle count of the battery 40, and a status of health of the battery 40 (electric leakage or impedance). In some other embodiments, the power management module may alternatively be disposed in a processor of the circuit board 30. In some other embodiments, the power management module and the charging management module may alternatively be disposed in a same device.

In this embodiment of this application, the display screen 10 may be an organic light-emitting diode (Organic Light-Emitting Diode, OLED) display, or may be a liquid crystal display (Liquid Crystal Display, LCD). It should be understood that the display screen 10 may include a display and a touch component. The display is configured to output display content to a user, and the touch component is configured to receive a touch event entered by the user on the display screen 10.

In this embodiment of this application, the rear cover 60 may be a metal cover, may be a glass cover, may be a plastic cover, or may be a ceramic cover. In this embodiment of this application, a material of the rear cover 60 is not limited. In this embodiment of this application, as shown in FIG. 2, the middle frame 20 may include a middle metal plate 25 and a bezel, and the bezel is disposed along the periphery of the middle metal plate 25. For example, the bezel may include a top bezel 24 and a bottom bezel 22 that are oppositely disposed, and a left bezel 23 and a right bezel 21 that are located between the top bezel 24 and the bottom bezel 22 and are oppositely disposed. A manner of connecting each bezel to the middle metal plate 25 includes but is not limited to welding, clamping, and integral injection molding. A material of the middle metal plate 25 may be aluminum or an aluminum alloy, or a material of the middle metal plate 25 may be a stainless steel material. It should be noted that the material of the middle metal plate 25 includes but is not limited to the foregoing materials.

The bezels (the top bezel 24, the bottom bezel 22, the left bezel 23, and the right bezel 21) may be metal bezels, may be glass bezels, or may be plastic bezels or ceramic bezels.

It should be noted that in some other examples, the mobile phone 100 may include the display screen 10 and a rear cover, and the rear cover may be a unibody (Unibody) rear cover formed by the rear cover 60 and the bezel (that is, a bezel formed by the top bezel 24, the bottom bezel 22, the left bezel 23, and the right bezel 21) in FIG. 2. The circuit board 30 and the battery 40 are located in a cavity formed by the display screen 10 and the rear cover through enclosing. It may be understood that the structure shown in this embodiment of this application does not constitute a specific limitation on the mobile phone 100. In some other embodiments of this application, the mobile phone 100 may include more or fewer components than those shown in the figure, or some components may be combined, or some components may be split, or different component arrangements may be used. For example, the mobile phone 100 may further include components such as the camera (for example, a front-facing camera and a rear-facing camera) and a flash.

The following separately describes a structure of the mobile phone 100 in a scenario 1, a scenario 2, and a scenario 3 by using the structure of the mobile phone shown in FIG. 2 as an example.

### Scenario 1

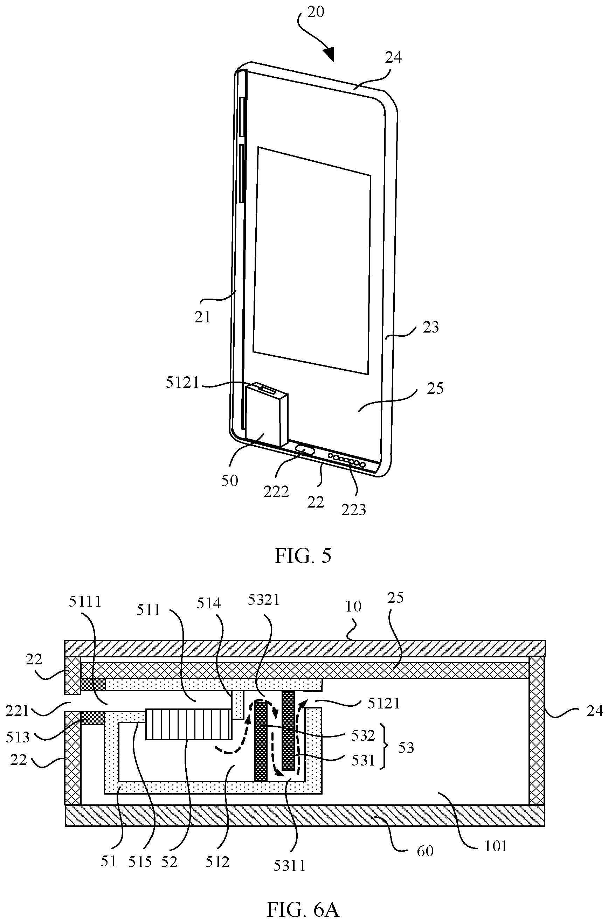

In an embodiment of this application, to implement a sound playing function of the mobile phone 100, as shown in FIG. 2, the mobile phone 100 may further include a sounding component 50. The sounding component 50 may convert an audio electrical signal into a sound signal, and the mobile phone 100 may play music or implement a hands-free call by using the sounding component 50. The sounding component 50 may be disposed on the surface that is of the middle frame 20 and that faces the rear cover 60. As shown in FIG. 3, a first sound hole 221 connected to a sound output hole 5111 (refer to FIG. 6A) of the sounding component 50 is disposed in the bottom bezel 22 of the mobile phone 100. A sound generated by the sounding component 50 can be transmitted outward from the first sound hole 221, to implement a sound playing function. It should be noted that in this embodiment of this application, a quantity of first sound holes 221 includes but is not limited to 7 shown in FIG. 3. For example, the quantity of first sound holes 221 may be alternatively greater than or less than 7.

In this embodiment of this application, a microphone (not shown) is further disposed in the mobile phone 100. The microphone is configured to convert a sound signal into an electrical signal. When making a call or sending a voice message, a user may make a sound by closing to the microphone, to input a sound signal to the microphone. In this embodiment of this application, as shown in FIG. 3, a second sound hole 223 opposite to the microphone is further disposed in the bottom bezel 22, so that an external sound can be input to the microphone through the second sound hole 223. As shown in FIG. 3, a power interface 222 located between the first sound hole 221 and the second sound hole 223 is further disposed in the bottom bezel 22, and the power interface 222 may be a USB Type-C interface or a micro USB interface.

It should be understood that disposition positions of the first sound hole 221, the second sound hole 223, and the power interface 222 include but are not limited to the positions in the bottom bezel 22 shown in FIG. 3. In some other examples, the positions of the first sound hole 221, the second sound hole 223, and the power interface 222 may be adjusted based on an actual requirement. In this embodiment of this application, at least one microphone may be disposed in the mobile phone 100. In some embodiments, two microphones may be disposed in the mobile phone 100, so that in addition to collecting a sound signal, a noise reduction function can be further implemented. In some other embodiments, three, four, or more microphones may alternatively be disposed in the mobile phone 100, to collect a sound signal, reduce noise, identify a sound source, implement a directional recording function, and the like.

In this embodiment of this application, the sounding component 50 and the microphone may be electrically connected to the processor on the circuit board 30 by using an audio module, so that the sounding component 50, the microphone, the audio module, and the processor implement an audio function, such as music playing and recording. The audio module may be disposed in the processor, or some functions of the audio module may be disposed in the processor. The audio module may convert digital audio information into analog audio signal output. The audio module is also configured to convert analog audio input into a digital audio signal, and may be further configured to encode and decode an audio signal.

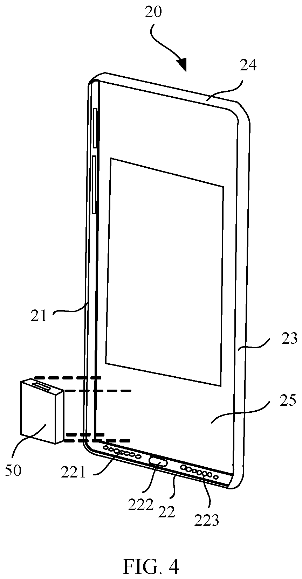

In this embodiment of this application, FIG. 4 and FIG. 5 are schematic diagrams of assembling the middle frame 20 and the sounding component 50. As shown in FIG. 4, the sounding component 50 is disposed at a position near the first sound hole 221 in the bottom bezel 22. After assembling, as shown in FIG. 5, the sounding component 50 may be fastened to a surface that is of the middle metal plate 25 and that faces the rear cover 60, a surface that is of the sounding component 50 and on which the sound output hole 5111 is disposed faces an inner surface of the bottom bezel 22, and the sound output hole 5111 of the sounding component 50 is connected to the first sound hole 221.

In this embodiment of this application, as shown in FIG. 6A, the sounding component 50 may include a box 51 (Box) and a sounding unit 52 disposed in the box 51. The box 51 has a cavity, and the cavity is partitioned into a front sound cavity 511 and a rear sound cavity 512 that are independent of each other. One end of the sounding unit 52 is located in the front sound cavity 511, and the other end of the sounding unit 52 is located in the rear sound cavity 512. For example, a front end of the sounding unit 52 is located in the front sound cavity 511, and a rear end of the sounding unit 52 is located in the rear sound cavity 512. An airflow generated by the sounding unit 52 enters the front sound cavity 511 and is transmitted outward through the sound output hole 5111 and the first sound hole 221, and the airflow enters the rear sound cavity 512 and enters a cavity 101 in the mobile phone 100 through a leakage hole 5121.

In this embodiment of this application, the sounding unit 52 may be a speaker (Speaker). For example, the sounding unit 52 may include a voice coil (namely, a coil), a magnet, and a diaphragm. A sounding principle is as follows: A current flows through the voice coil, so that a magnetic field generated by the voice coil changes, a magnetic force between the magnet and the voice coil changes, and a distance between the magnet and the voice coil also changes. The diaphragm is driven to vibrate for sounding. In this embodiment of this application, a sounding unit 52 that has larger amplitude or can generate a larger driving force may be selected, to achieve a better sound playing effect. It should be noted that the sounding unit 52 includes without limiting to the voice coil, the magnet, and the diaphragm, and may further include a support component and a positioning component.

In this embodiment of this application, as shown in FIG. 6A, the sound output hole 5111 connected to the front sound cavity 511 is disposed in the box 51. For example, the sound output hole 5111 is disposed on a sidewall that is of the box 51 and that is opposite to the bottom bezel 22, and the sound output hole 5111 is opposite to the first sound hole 221. In this embodiment of this application, one or more sound output holes 5111 may be disposed in the box 51. It should be noted that, when one sound output hole 5111 is disposed in the box 51, an area of a projection of the sound output hole 5111 on the bottom bezel 22 can cover all first sound holes 221. When a plurality of sound output holes 5111 are disposed in the box 51, the plurality of sound output holes 5111 may be in a one-to-one correspondence with a plurality of first sound holes 221, or one sound output hole 5111 may correspond to a plurality of first sound holes 221. In this embodiment of this application, a quantity of sound output holes 5111 is specifically set based on an actual requirement. In this embodiment of this application, the box 51 may be a plastic box.

In this embodiment of this application, when the sound output hole 5111 is connected to the first sound hole 221, to prevent the front sound cavity 511 from being connected to the cavity 101 inside the mobile phone 100, as shown in FIG. 6A, a sealing member 513 is disposed between an outer edge of the sound output hole 5111 in the box 51 and an outer edge of a plurality of first sound holes 221 in the bottom bezel 22, so that the front sound cavity 511 is separated from and is not connected to the cavity 101 inside the mobile phone 100, and an airflow generated due to vibration of the diaphragm of the sounding unit 52 is transmitted outward through the sound output hole 5111 and the first sound hole 221. This resolves a problem of a poor sound playing effect of the sounding component 50 caused because the airflow generated by the sounding unit 52 enters the cavity 101 inside the mobile phone 100 after passing through the sound output hole 5111.

In this embodiment of this application, the sealing member 513 may be a sealing ring, or the sealing member 513 may be a sealing adhesive. When the sealing adhesive is used, the sealing adhesive not only plays a sealing role, but also fastens the box 51 to the bottom bezel 22. In addition, in this embodiment of this application, when the sealing member 513 is disposed between the outer edge of the sound output hole 5111 in the box 51 and the bottom bezel 22, external water vapor or an external impurity does not enter the mobile phone 100 due to impeding of the sealing member 513. In this embodiment of this application, to increase a size of the rear sound cavity 512 to achieve a better low-frequency effect of the sounding component 50, the leakage hole 5121 that can connect the rear sound cavity 512 to the cavity 101 inside the mobile phone 100 is disposed in the box 51. The rear sound cavity 512 of the sounding component 50 is connected to the cavity 101 inside the mobile phone 100, and the cavity 101 inside the mobile phone 100 can be used as an extension of the rear sound cavity 512 of the sounding component 50, so that the size of the rear sound cavity 512 of the sounding component 50 increases. When the rear sound cavity 512 increases, acoustic impedance is smaller, and a low frequency is more prone to appear. This ensures that a low frequency of the sounding component 50 is low (<650 Hz), a low-frequency extension is large, dynamic performance is good, and power consumption is low.

In this embodiment of this application, the cavity 101 inside the mobile phone 100 is specifically a cavity jointly formed through enclosing by an internal surface of the rear cover 60, the surface that is of the middle metal plate 25 and that faces the rear cover 60, and an inner surface of a bezel located between the rear cover 60 and the middle metal plate 25. When the cavity in the box 51 is partitioned into the front sound cavity 511 and the rear sound cavity 512, specifically, the cavity of the box 51 may be partitioned into the front sound cavity 511 and the rear sound cavity 512 by using a horizontal partition board 515 and a vertical partition board 514 in FIG. 6A. When the sounding unit 52 is disposed in the box 51, an installation port may be disposed on the horizontal partition board 515, the sounding unit 52 may be horizontally installed on the installation port, one end of the sounding unit 52 is located in the front sound cavity 511, and the other end of the sounding unit 52 is located in the rear sound cavity 512. In some other embodiments, the sounding unit 52 may be alternatively vertically installed in the cavity of the box 51.

When the leakage hole 5121 is disposed in the box 51, an airflow generated due to vibration of the diaphragm of the sounding unit 52 acts on the rear cover 60 through the leakage hole 5121, and the relatively thin rear cover 60 is prone to housing vibration under the action of the airflow. Consequently, a user has a strong vibration feeling when holding the mobile phone 100 by a hand. This is not conducive to user experience.

Based on the foregoing description, in this embodiment of this application, the sounding component 50 may further include a damping component 53, to damp vibration of the rear cover 60 caused due to an action of an airflow generated by the sounding component 50 on the rear cover 60. The damping component 53 may be disposed near the leakage hole 5121. For example, the damping component 53 may be disposed in the rear sound cavity 512 and close to the leakage hole 5121, or the damping component 53 may be disposed on the leakage hole 5121. In this embodiment of this application, the damping component 53 may form an airflow channel (shown by a dashed arrow in FIG. 6A) that connects the rear sound cavity 512 to the cavity 101. An airflow generated in the rear sound cavity 512 enters the cavity 101 through the airflow channel. In this embodiment of this application, an airflow generated due to vibration of the diaphragm of the sounding unit 52 in the rear sound cavity 512 needs to pass through the damping component 53 before entering the cavity 101. When the airflow passes through the damping component 53, the damping component 53 can slow down the airflow generated in the rear sound cavity 512 of the sounding component 50, so that the airflow enters the cavity 101 inside the mobile phone 100 at a low flow rate. This weakens impact of the airflow on the relatively thin rear cover 60, decreases amplitude, damps or alleviates housing vibration of the rear cover 60, and improves user handhold experience.

Therefore, according to the electronic device provided in this embodiment of this application, the sounding component 50 further includes the damping component 53, and the damping component 53 is disposed near the leakage hole 5121. The damping component 53 can slow down an airflow in the rear sound cavity 512, so that the airflow enters the cavity 101 inside the mobile phone 100 at a low flow rate through the leakage hole 5121. After the airflow enters the cavity 101 inside the mobile phone 100, impact on the relatively thin rear cover 60 weakens, and amplitude decreases, and housing vibration of the rear cover 60 is damped. A user is not prone to have a vibration feeling when holding the mobile phone 100 by a hand, and therefore user handhold experience is improved. According to the electronic device provided in this embodiment of this application, housing vibration is damped on a basis of ensuring that a low frequency extension of the sounding component 50 is large. This resolves a problem that a user has a strong vibration feeling when holding the mobile phone 100 by a hand because housing vibration occurs on a rear cover 60 of an existing mobile phone 100 due to airflow impact.

In a possible implementation, in this embodiment of this application, the damping component 53 may include at least one guide board. For example, as shown in FIG. 6A, the damping component 53 may include two guide boards: a first guide board 531 and a second guide board 532. The first guide board 531 and the second guide board 532 are disposed in the rear sound cavity 512 at an interval. The first guide board 531 is disposed near the leakage hole 5121. The first guide board 531, the second guide board 532, and a partial inner wall of the box 51 form the airflow channel (shown by the dashed arrow in FIG. 6A) through enclosing. One end of the airflow channel is connected to the cavity 101 in the mobile phone 100 through the leakage hole 5121, and the other end of the airflow channel is connected to the rear sound cavity 512. An airflow in the rear sound cavity 512 is transmitted to the leakage hole 5121 through the airflow channel, and the airflow channel extends a path along which the airflow reaches the leakage hole 5121. When the airflow in the rear sound cavity 512 reaches the leakage hole 5121, the airflow enters the cavity 101 in the mobile phone 100 at a low flow rate. This weakens impact on the rear cover 60, decreases amplitude, damps housing vibration of the rear cover 60, and improves user handhold experience.

In this embodiment of this application, when the first guide board 531 and the second guide board 532 are disposed in the rear sound cavity 512, as shown in FIG. 6A, the leakage hole 5121 may be disposed at a top end of a sidewall of the rear sound cavity 512. To extend a transmission path along which an airflow reaches the leakage hole 5121, for example, the first guide board 531 and the second guide board 532 may be located between an inner bottom wall and an inner top wall of the box 51 in FIG. 6A. One end of the first guide board 531 is connected to the inner top wall of the box 51 (that is, an inner wall that is of the box 51 and that is close to the display screen 10), the other end of the first guide board 531 is suspended, and a first circulation gap 5311 exists between the other end of the first guide board 531 and the inner bottom wall of the box 51. One end of the second guide board 532 is connected to the inner bottom wall of the box 51 (that is, an inner wall that is of the box 51 and that is close to the rear cover 60), the other end of the second guide board 532 is suspended, and a second circulation gap 5321 exists between the other end of the second guide board 532 and the inner top wall. The first circulation gap 5311 is disposed away from the leakage hole 5121, and the second circulation gap 5321 is disposed away from the first circulation gap 5311. In this case, an airflow channel with a relatively long path (shown by the dashed arrow in FIG. 6A) is formed between the first guide board 531, the second guide board 532, and the partial inner wall of the box 51 through enclosing. An airflow in the rear sound cavity 512 passes through the airflow channel, and the airflow enters the cavity 101 of the mobile phone 100 at a low flow rate. This weakens impact on the rear cover 60, and damps vibration of the rear cover 60.

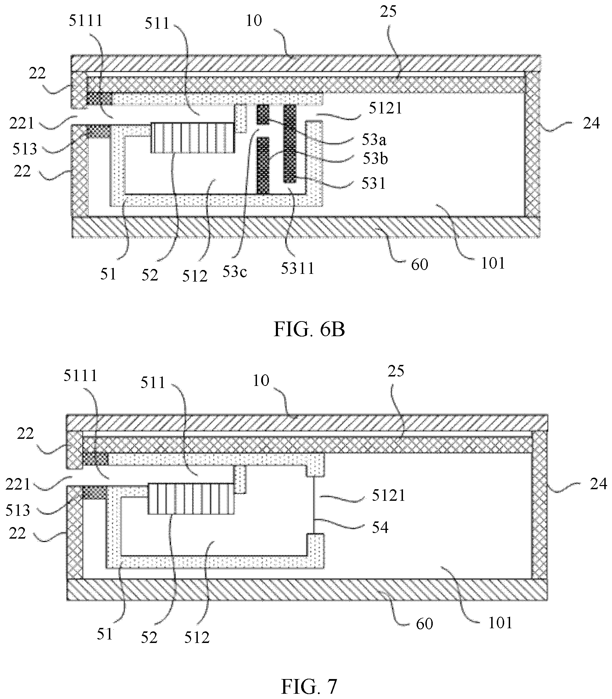

In a possible implementation, as shown in FIG. 6B, two ends of the second guide board 532 may be respectively connected to the inner walls of the box 51. For example, one end of the second guide board 532 is connected to the inner wall that is of the box 51 and that is close to the rear cover 60, and the other end of the second guide board 532 is connected to the inner wall that is of the box 51 and that is close to the display screen 10. A circulation port 53c is disposed in the second guide board 532, and the circulation port 53c partitions the second guide board 532 into an upper guide board 53a and a lower guide board 53b. To extend a path of the airflow channel, the first circulation gap 5311 between the first guide board 531 and the inner wall of the rear sound cavity 512, the circulation port 53c, and the leakage hole 5121 are disposed away from each other. For example, the circulation gap between the first guide board 531 and the inner wall of the rear sound cavity 512 may be disposed away from the leakage hole 5121, and the circulation port 53c in the second guide board 532 is disposed away from the first circulation gap 5311. In this way, an airflow channel with a relatively long path is formed, to better slow down an airflow.

Certainly, in this embodiment of this application, two ends of the first guide board 531 may be alternatively connected to the two opposite inner walls of the box 51. For example, one end of the first guide board 531 is connected to the inner wall that is of the box 51 and that is close to the rear cover 60, and the other end of the first guide board 531 is connected to the inner wall that is of the box 51 and that is close to the display screen 10. A circulation port 53c may be disposed in the first guide board 531. The first guide board 531 is partitioned into upper and lower guide boards. In this embodiment of this application, it should be noted that the damping component 53 may include but is not limited to the first guide board 531 and the second guide board 532, for example, may further include a third guide board or a fourth guide board. A disposition quantity of guide boards may be set based on an actual requirement. The first guide board 531 and the second guide board 532 may be vertical boards as shown in FIG. 6A. Certainly, in some other examples, the first guide board 531 and the second guide board 532 may be alternatively arc boards. A transmission path along which an airflow reaches the leakage hole 5121 can be further extended, so that an airflow in the rear sound cavity 512 is better slowed down.

In this embodiment of this application, the first guide board 531 and the second guide board 532 may be plastic boards. For example, the first guide board 531 and the second guide board 532 may be plastic boards. Certainly, materials of the first guide board 531 and the second guide board 532 include but are not limited to plastic. In this embodiment of this application, a width of a gap between the first guide board 531 and the second guide board 532 and thicknesses of the first guide board 531 and the second guide board 532 are set based on an actual requirement. When the first guide board 531 and the second guide board 532 are connected to the inner walls of the box 51, the first guide board 531 and the second guide board 532 may be connected to the inner walls of the box 51 through fastening in an adhesive, hot melting, or injection molding manner.

### Scenario 2

In an embodiment of this application, referring to FIG. 7, a sounding component 50 may include a damping component 54, and the damping component 54 may be disposed on a leakage hole 5121. In this embodiment of this application, the damping component 54 may include at least one waterproof breathable film. The waterproof breathable film is disposed on the leakage hole 5121. Breathable holes in the waterproof breathable film connect a rear sound cavity 512 to a cavity 101. The breathable holes in the waterproof breathable film slow down an airflow generated in the rear sound cavity 512. For example, as shown in FIG. 7, the damping component 54 includes one waterproof breathable film. When an airflow passes through the leakage hole 5121, the waterproof breathable film slows down the airflow. A transmission rate of the airflow decreases, and the airflow enters the mobile phone 100 at a low flow rate. This weakens airflow impact on the rear cover 60, decreases amplitude, damps vibration of the rear cover 60, and improves user experience in holding the mobile phone 100 by a hand. In addition, when the damping component 54 includes the waterproof breathable film, the waterproof breathable film may play a waterproof role. When water vapor or liquid exists in the cavity 101 in the mobile phone 100, the water vapor or liquid does not enter the rear sound cavity 512 due to impeding of the waterproof breathable film, thereby avoiding impact of the water vapor or liquid on performance of a sounding unit 52.

In this embodiment of this application, a quantity of waterproof breathable films includes but is not limited to 1. Alternatively, there may be alternatively a plurality of waterproof breathable films, and the plurality of waterproof breathable films may be disposed on the leakage hole 5121 at intervals. When the waterproof breathable film is installed on the leakage hole 5121, the waterproof breathable film can be fastened to the leakage hole 5121 in an adhesive, hot melting, or injection molding manner.

### Scenario 3

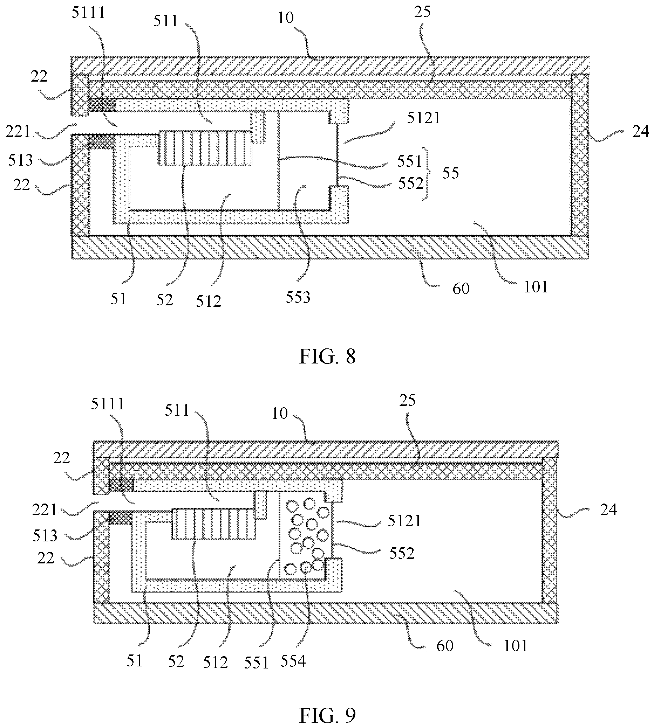

In an embodiment of this application, a sounding component 50 may include a damping component 55, and the damping component 55 may include at least one mesh (Mesh). For example, as shown in FIG. 8, the damping component 55 includes two meshes: a first mesh 551 and a second mesh 552. The first mesh 551 is connected to inner walls of a box 51, the second mesh 552 is installed on a leakage hole 5121, and there is buffer space 553 between the first mesh 551 and the second mesh 552. An airflow generated by a sounding unit 52 in a rear sound cavity 512 enters a cavity 101 in the mobile phone 100 through the second mesh 552, the buffer space 553, and the first mesh 551; and the second mesh 552, the buffer space 553, and the first mesh 551 slow down the airflow, so that a flow rate of the airflow decreases. The airflow enters the cavity 101 in the mobile phone 100 at a low flow rate. Therefore, airflow impact on the rear cover 60 of the mobile phone 100 weakens, and amplitude decreases, so that vibration of the rear cover 60 is damped, thereby improving user experience in holding the mobile phone 100 by a hand.

Therefore, according to the first mesh 551 and the second mesh 552 provided in this embodiment of this application, an airflow can be slowed down, so that the airflow enters the cavity 101 in the mobile phone 100 at a low flow rate. Therefore, airflow impact on the rear cover 60 of the mobile phone 100 weakens, and amplitude decreases, so that vibration of the rear cover 60 is damped. In addition, the first mesh 551 and the second mesh 552 are disposed near the leakage hole 5121, so that the first mesh 551 and the second mesh 552 can play a dustproof role, to prevent foreign matter in the cavity 101 of the mobile phone 100 from entering the rear sound cavity 512.

In this embodiment of this application, the first mesh 551 and the second mesh 552 may be disposed in the rear sound cavity 512 and on the leakage hole 5121 in an adhesive, hot melting, or injection molding manner.

In a possible implementation, to further reduce a flow rate at which an airflow enters the mobile phone 100, a sound absorbing material may be disposed in the buffer space 553 between the first mesh 551 and the second mesh 552. For example, as shown in FIG. 9, the sound absorbing material disposed in the buffer space 553 between the first mesh 551 and the second mesh 552 is sound absorbing particles 554, and the sound absorbing particles 554 are filled in the buffer space 553. After the airflow enters the buffer space 553, the sound absorbing material impedes the airflow to a specific degree, and the airflow rubs against the sound absorbing material in a transmission process. The rubbing enables partial sound energy to be converted into heat energy to be absorbed by the sound absorbing material. This consumes the sound energy of the airflow, decreases a flow rate of the airflow, and ensures that the airflow enters the cavity 101 of the mobile phone 100 at a low flow rate. Therefore, airflow impact on the rear cover 60 weakens, the rear cover 60 is not prone to housing vibration, and a user is not prone to have a vibration feeling when holding the mobile phone 100 by a hand.

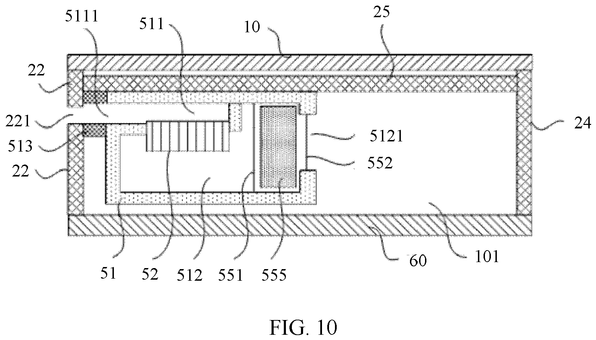

In a possible implementation, as shown in FIG. 10, the sound absorbing material disposed in the buffer space 553 between the first mesh 551 and the second mesh 552 is sound absorbing cotton 555, and the sound absorbing cotton 555 is filled in the buffer space 553. After an airflow enters the buffer space 553, the sound absorbing cotton 555 impedes transmission of the airflow to a specific degree, and the airflow rubs against small holes in the sound absorbing cotton 555 in a transmission process. The rubbing enables partial sound energy to be converted into heat energy to be absorbed by the sound absorbing cotton 555. This consumes the sound energy of the airflow, decreases a flow rate of the airflow, and ensures that the airflow enters the cavity 101 of the mobile phone 100 at a low flow rate. Therefore, airflow impact on the rear cover 60 weakens, the rear cover 60 is not prone to housing vibration, and a user is not prone to have a vibration feeling when holding the mobile phone 100 by a hand. In this embodiment of this application, the sound absorbing cotton 555 may be mineral wool, glass wool, a blanket, or the like.

In some other embodiments, the sound absorbing material disposed in the buffer space 553 between the first mesh 551 and the second mesh 552 may include but is not limited to the foregoing sound absorbing particle 554 and sound absorbing cotton 555, or may be a porous wood wool sound absorbing board or an inorganic foam sound absorbing material.

In descriptions of embodiments of this application, it should be noted that, unless otherwise clearly specified and limited, terms "assemble", "connected", and "connection" should be understood in a broad sense. For example, the terms may be used for a fixed connection, an indirect connection through an intermediate medium, an internal connection between two elements, or an interaction relationship between two elements. Persons of ordinary skill in the art may understand specific meanings of the terms in embodiments of this application based on specific cases.

In the specification, claims, and accompanying drawings of embodiments of this application, the terms "first", "second", "third", "fourth", and the like (if any) are intended to distinguish between similar objects but do not necessarily indicate a specific order or sequence.

Finally, it should be noted that the foregoing embodiments are merely intended for describing the technical solutions in embodiments of this application rather than limiting this application. Although embodiments of this application are described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of embodiments of this application.

## Claims

1. A sounding component, applied to an electronic device having a cavity and a sound hole, wherein the sounding component comprises a box and a sounding unit disposed in the box, the box has a front sound cavity and a rear sound cavity that are independent of each other, one end of the sounding unit is located in the front sound cavity, and the other end of the sounding unit is located in the rear sound cavity;
a sound output hole and a leakage hole are disposed in the box, the front sound cavity is connected to the sound hole of the electronic device through the sound output hole, and the rear sound cavity is connected to the cavity of the electronic device through the leakage hole; and
the sounding component further comprises a damping component, wherein the damping component is located in the rear sound cavity and disposed near the leakage hole, and the damping component is configured to form an airflow channel that connects the rear sound cavity to the cavity of the electronic device.

2. The sounding component according to claim 1, wherein the damping component comprises at least one guide board, at least one end of the guide board is connected to an inner wall of the box, and the guide board and a partial inner wall of the box form the airflow channel through enclosing.

3. The sounding component according to claim 2, wherein the damping component comprises a first guide board and a second guide board, and the first guide board is close to the leakage hole;
one end of the first guide board is connected to an inner wall that is of the box and that is close to a display screen of the electronic device, and the other end of the first guide board is suspended; and
one end of the second guide board is connected to an inner wall that is of the box and that is close to a rear cover of the electronic device, and the other end of the second guide board is suspended.

4. The sounding component according to claim 2, wherein the damping component comprises a first guide board and a second guide board, and the first guide board is close to the leakage hole;
one end of the first guide board is connected to an inner wall that is of the box and that is close to a display screen of the electronic device, and the other end of the first guide board is connected to an inner wall that is of the box and that is close to a rear cover of the electronic device;
one end of the second guide board is connected to the inner wall that is of the box and that is close to the rear cover of the electronic device, and the other end of the second guide board is connected to the inner wall that is of the box and that is close to the display screen of the electronic device; and
a first circulation port is disposed in the first guide board, a second circulation port is disposed in the second guide board, the first circulation port is disposed away from the leakage hole, and the second circulation port is disposed away from the first circulation port.

5. The sounding component according to claim 1, wherein the damping component comprises at least one waterproof breathable film, and the waterproof breathable film is disposed on the leakage hole.

6. The sounding component according to claim 1, wherein the damping component comprises at least one mesh, and the mesh is disposed on the leakage hole, or the mesh is connected to inner walls of the box.

7. The sounding component according to claim 6, wherein the damping component comprises a first mesh and a second mesh, the first mesh is disposed on the leakage hole, the second mesh is connected to the inner walls of the box, and there is buffer space between the first mesh and the second mesh.

8. The sounding component according to claim 7, wherein a sound absorbing material is disposed in the buffer space, and the sound absorbing material comprises one or more of a sound absorbing particle, sound absorbing cotton, and a sound absorbing board.

9. The sounding component according to any one of claims 1 to 8, wherein at least one partition board is disposed in the box, the partition board partitions inner space of the box into the front sound cavity and the rear sound cavity, and the sounding unit is sleeved onto the partition board.

10. An electronic device, comprising at least a display screen, a middle frame, a rear cover, and the sounding component according to any one of claims 1 to 9, wherein the display screen and the rear cover are respectively located on two sides of the middle frame, the sounding component is located in a cavity formed by the rear cover and the middle frame through enclosing, a front sound cavity of the sounding component is connected to a sound hole disposed in a bezel of the middle frame, and a rear sound cavity of the sounding component is connected to the cavity.

11. An electronic device, comprising at least a display screen, a rear cover, and the sounding component according to any one of claims 1 to 9, wherein the sounding component is located in a cavity formed by the rear cover and the display screen through enclosing, a front sound cavity of the sounding component is connected to a sound hole disposed in a side bezel of the rear cover, and a rear sound cavity of the sounding component is connected to the cavity.
